# EUROPEAN PATENT SPECIFICATION

(11) **EP 2 221 956 B1**
(45) Date of publication and mention of the grant of the patent: **01.01.2020**
(21) Application number: 08851010.2
(22) Date of filing: 12.11.2008
(51) Int. Cl.: H02P 6/28, F24F 11/00, G01R 19/00

(54) **MOTOR CURRENT CALCULATION DEVICE AND AIR CONDITIONING DEVICE**
MOTORSTROMBERECHNUNGSEINRICHTUNG UND KLIMAANLAGENEINRICHTUNG
DISPOSITIF DE CALCUL DE COURANT DE MOTEUR ET DISPOSITIF DE CONDITIONNEMENT D'AIR

(30) Priority: 16.11.2007 JP 2007298475
(43) Date of publication of application: 25.08.2010
(73) Proprietor: Daikin Industries, Ltd., Osaka 530-8323 (JP)
(72) Inventor: IKEDA, Motonobu, Sakai-shi Osaka 591-8511 (JP); YAGI, Satoshi, Sakai-shi Osaka 591-8511 (JP); SHIMATANI, Keisuke, Sakai-shi Osaka 591-8511 (JP); MAEDA, Hirohito, Kusatsu-shi Shiga 525-8526 (JP); HASHIMOTO, Masafumi, Sakai-shi Osaka 591-8511 (JP)
(74) Representative: Hoffmann Eitle
(86) International application number: PCT/JP2008/070551
(87) International publication number: WO 2009/063886

(56) References cited:
- DE-A1- 4 414 707
- JP-A- 10 290 592
- JP-A- 2003 284 374
- JP-A- 2007 274 747
- KR-A- 20030 087 698
- US-A1- 2004 056 661

## Description

### TECHNICAL FIELD

The present invention relates to a motor current calculation device. The present invention also relates to an air conditioning apparatus comprising the motor current calculation device.

### BACKGROUND ART

An air conditioning apparatus comprises a compressor, a variety of devices such a compressor, a fan and the like. A motor is often used as a power source for these devices.

The motor is connected to a motor drive unit (called a "driver" below) composed of a plurality of switching elements, and can be caused to rotate using a drive voltage outputted by turning the switching elements in the driver ON and OFF.

In some cases, the rotational speed of the motor is controlled in order to operate the various types of devices such as the compressor, the fan in an appropriate state. A motor current that is passed through the motor is often used for such motor rotational speed control. Here, as a method for detecting the motor current, for example, as disclosed in Patent Document 1, there is known a technology where shunt resistor used as current-detecting elements are serially connected to the wiring through which the motor current flows, and the motor current is detected based on the voltages at either end of the shunt resistor.

In Patent Document 2 there is described a motor current calculation device comprising a first wire in which flows a motor current that has been passed through a motor and a drive current that has been passed through a motor drive unit for driving a motor, and further, a current detecting unit that detects the sum of the motor current and the drive current flowing through the first wire. A decision unit determines a detection result of the current detecting unit when the motor is not rotating as the drive current.

Patent Document 3 describes a phase current detector. Here, a first condenser is connected between output terminals of a rectifier circuit which rectifies an AC power as an input, and a three phase inverter is connected in parallel with respect to the first condenser. An output of the three phase inverter is supplied to a motor, and a second condenser is connected in parallel to the input side of the three phase inverter, and a current detector is connected between the first condenser and the second condenser. Further, a third condenser is connected in parallel to the first condenser at a position slightly power side with respect to the current detector, and the capacitance of the second capacitor is determined as small as possible within the range in which the power devices are not destroyed by surge voltage due to switching. Further, Patent Document 4 describes an electric current detector and a rotational speed controller. A motor incorporates a motor main body, a driver and an inverter. The inverter converts direct current voltages applied from a direct current power source through terminals into alternating current voltage, and supplies it to the motor main body. The driver controls the operation of the inverter. A current sensing resistor is connected between the direct current power source and the terminal. An isolation amplifier isolates current data indicating a current path through the current sensing resistor from the current sensing resistor, and outputs it based on a voltage drop in the current sensing resistor.

Patent Document 5 describes a method and device for the flow-through-control of an air stream. The particular fields of application are heating and cooling for the interior of a driving vehicle.
<Patent Document 1> Japanese Laid-open Patent Application No. 2005-192358
<Patent Document 2> KR 2003 0087698 A
<Patent Document 3> US 2004/056661 A1
<Patent Document 4> JP 2007 274747 A
<Patent Document 5> DE 44 14 707 A1

### DISCLOSURE OF THE INVENTION

### <Technical Problem>

Other than when the motor and the driver are separately disposed, sometimes the motor and the driver are built into a motor device. However, in such a motor device, when the technique pertaining to Patent Document 1 is applied to detect motor current flowing in the motor portion, in terms of the configuration of the motor device, the drive current flowing through the driver ends up flowing in addition to the motor current on the wire where the shunt resistor is connected in series, so obtaining the motor current only ends up becoming difficult.

An object of the present invention is to provide a motor current calculation device enabling the motor current to be readily found, and an air conditioning apparatus comprising the motor current calculation device.

### <Solution to Problem>

A motor current calculation device according to a first aspect of the present invention comprises the features of claim 1, i.e. a first wire, a motor current calculation device, a second wire, a third wire, a current detecting unit, a decision unit, and a calculation unit. A motor current that has been passed through a motor and a drive current that has been passed through a motor drive unit for driving the motor flow through the first wire. The motor current calculation device is mounted on a printed board together with a motor-use power supply device for generating a power supply for the motor and a drive-use power supply device for generating a power supply for the motor drive unit and a second wire joins the output of the motor-use power supply device and an interface of the printed board; and a third wire joins the output of the drive-use power supply device and the interface of the printed board. The current detecting unit detects the sum of the motor current and the drive current flowing through the first wire. The decision unit determines a detection result of the current detecting unit when the motor is not rotating as the drive current. The calculation unit calculates the motor current by subtracting the drive current determined by the decision unit from a detection result of the current detecting unit when the motor is rotating.

When the motor is not rotating (i.e., when the motor is making approximately zero rotations per minute), the motor current is substantially 0 A; however, since the drive current flows through the motor drive unit, the current detecting unit is capable of detecting the drive current. Therefore, the motor current calculation device calculates the motor current by subtracting the detection result of the current detecting unit when the motor is not rotating from a detection result of the current detecting unit when the motor is rotating. It is thereby possible to determine the motor current in a simple manner, even when both the motor current and the drive current flow through the first wire. Moreover, since the detection result of the current detector when the motor is not rotating is used in the calculations, then if the calculation unit comprises, e.g., a microcomputer, the capacity of the microcomputer can be reduced.

A motor current calculation device according to a second aspect of the present invention comprises the motor current calculation device according to the first aspect of the present invention, further comprising a current leveling unit. The current leveling unit levels the drive current before the drive current has flowed through the first wire.

Since the motor current and the leveled drive current flow through the first wire, the current detecting unit can detect the sum of the motor current and the leveled drive current. Consequently, the calculation unit can determine the motor current using stable detection results that include the drive current.

A motor current calculation device according to a third aspect comprises is the motor current calculation device according to the second aspect of the present invention, wherein the current leveling unit has a resistor and a capacitor. The resistor is connected in series on the third wire. The capacitor is connected to the third wire in parallel with respect to the resistor.

The current leveling unit in the motor current calculation device is configured by a so-called filter circuit comprising the resistor and the capacitor. The motor current calculation device can level the drive current with the current leveling unit having a simple configuration.

A motor current calculation device according to a fourth aspect of the present invention comprises the motor current calculation device of any of the first through third aspects of the present invention, wherein the motor and the motor drive unit are included in a motor device.

When the motor and the motor drive unit are built into the motor device, in terms of the consideration thereof, it is difficult to separately dispose the wire on which the motor current that has been passed through the motor flows and the wire on which the drive current that has been passed through the motor drive unit flows. However, when the motor current calculation device according to the present invention is used in such a case, the detection results of the current detecting unit when the motor is not operating are used in calculations as the drive current; therefore, the motor current calculation device can calculate the motor current very accurately.

An air conditioning apparatus according to a fifth aspect of the present invention comprises the features of claim 5, i.e. a motor current calculation device, a fan motor, a fan, and a control unit. The motor current calculation device is the motor current calculation device according to any of the first through fourth aspects of the present invention. The fan motor is included in the motor device together with the motor drive unit, and motor current is passed through the fan motor. The fan is driven to rotate by the fan motor. The control unit performs control of the volume of air sent into a room from the fan on the basis of the motor current that has been calculated by the calculation unit of the motor current calculation device.

According to this air conditioning apparatus, it is possible to perform a control based on the accurate motor current calculated by the motor current calculation device so that, e.g., the volume of air sent into a room remains constant.

### <Advantageous Effects of Invention>

According to the motor current calculation device of the first aspect of the present invention, it is possible to determine the motor current in a simple manner, even when both the motor current and the drive current flow through the first wire. Moreover, since the detection result of the current detector when the motor is not rotating is used in the calculations, then if the calculation unit comprises, e.g., a microcomputer, the capacity of the microcomputer can be reduced.

According to the motor current calculation device of the second aspect of the present invention, the calculation unit can determine the motor current using stable detection results that include the drive current.

According to the motor current calculation device of the third aspect of the present invention, the drive current is leveled using the current leveling unit having a simple configuration.

According to the motor current calculation device of the fourth aspect of the present invention, even if the motor and the motor drive unit are built into the motor device, the detection results when the motor is not rotating are used in calculations as the drive current; therefore, the motor current calculation device can calculate the motor current very accurately.

According to the air conditioning apparatus of the fifth aspect of the present invention, it is possible to perform a control based on the accurate motor current calculated by the motor current calculation device so that, e.g., the volume of air sent into a room remains constant.

### BRIEF DESCRIPTION OF THE DRAWINGS

FIG. 1 is a schematic plan view showing the configuration of an air conditioning apparatus according to the present embodiment.
FIG. 2 is a refrigerant circuit diagram of the air conditioning apparatus of the present embodiment.
FIG. 3 is a perspective view of the first and second heat exchangers provided to the air conditioning apparatus.
FIG. 4 is a diagram showing the circuit configuration in a printed board on which the motor current calculation device according to the present embodiment has been mounted, and the schematic configuration of a second fan motor connected to the printed board.
FIG. 5 is a graph showing the change over time in the drive current Id' when no current leveling unit is provided, the change over time in the motor current Im, and the change over time in the GND current Ig.
FIG. 6 is a graph showing the change over time in the drive current Id leveled using a current leveling unit, the change over time in the motor current Im, and the change over time in the GND current Ig.
FIG. 7 is a graph showing the change over time in the drive current Id leveled when a second fan motor is stopped and when it is running, the change over time in the motor current Im, and the change over time in the GND current Ig.
FIG. 8 is a block diagram schematically depicting the configuration of an air conditioning apparatus according to the present embodiment.
FIG. 9 is a diagram showing the internal circuit configuration of a printed board on which the motor current calculation device according to another embodiment (g) is mounted, and the schematic configuration of a second fan motor connected to this printed board.
FIG. 10 is a diagram showing the internal circuit configuration of a printed board on which the motor current calculation device according to another embodiment (h) is mounted, and the schematic configuration of a second fan motor connected to this printed board.

### EXPLANATION OF THE REFERENCE NUMERALS

- 1: Air conditioning apparatus
- 2: Casing
- 3a: First heat exchanger
- 3b: Second heat exchanger
- 4: Compressor
- 5: Compressor-use motor
- 6a: First fan
- 6b: Second fan
- 7: First fan motor
- 8: Second fan motor device
- 9: Motor current calculation device
- 10a: Motor-use power supply device
- 10b: Drive-use power supply device
- 11: Control unit
- 71: First motor driver
- 81: Second fan motor
- 82: Second motor driver
- 91: Motor-use power supply wire
- 92: Drive-use power supply wire
- 93: Current leveling unit
- 94: GND wire
- 95: Current detecting unit
- 96: Microcomputer
- 96a: Decision unit
- 96b: Calculation unit
- R1: Resistor
- C1: Capacitor
- Rs: Shunt resistor
- OP1: Operational amplifier
- Im: Motor current
- Id: Drive current
- Ig: GND current

### BEST MODE FOR CARRYING OUT THE INVENTION

The following is a description, made with reference to the drawings, of a motor current calculation device according to the present invention and an air conditioning apparatus comprising this motor current calculation device.

### (1) Configuration

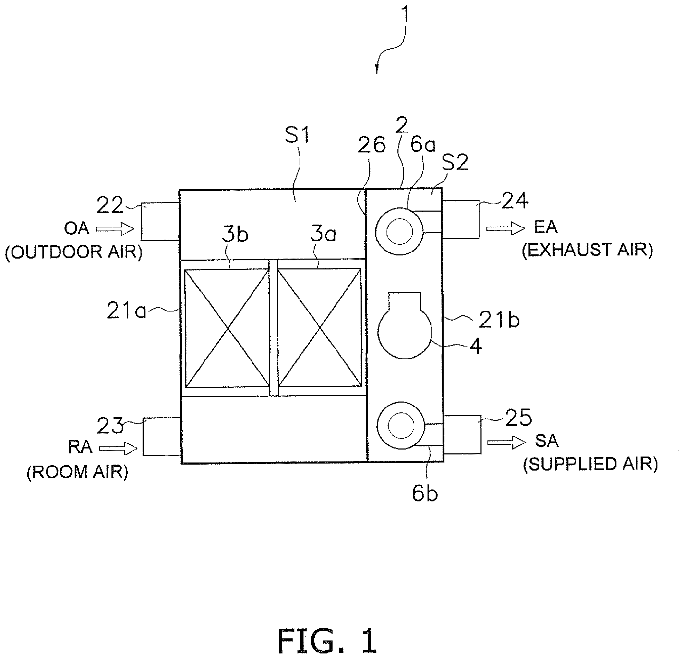

FIG. 1 is a schematic plan view showing the configuration of an air conditioning apparatus 1 according to an embodiment of the present invention. The air conditioning apparatus 1 of FIG. 1 is a desiccant-type outdoor an conditioner wherein silica gel or another adsorbent is maintained on the surface of a heat-exchangers, and the air supplied to indoor space is subjected to a cooling and dehumidifying operation or a heating and humidifying operation.

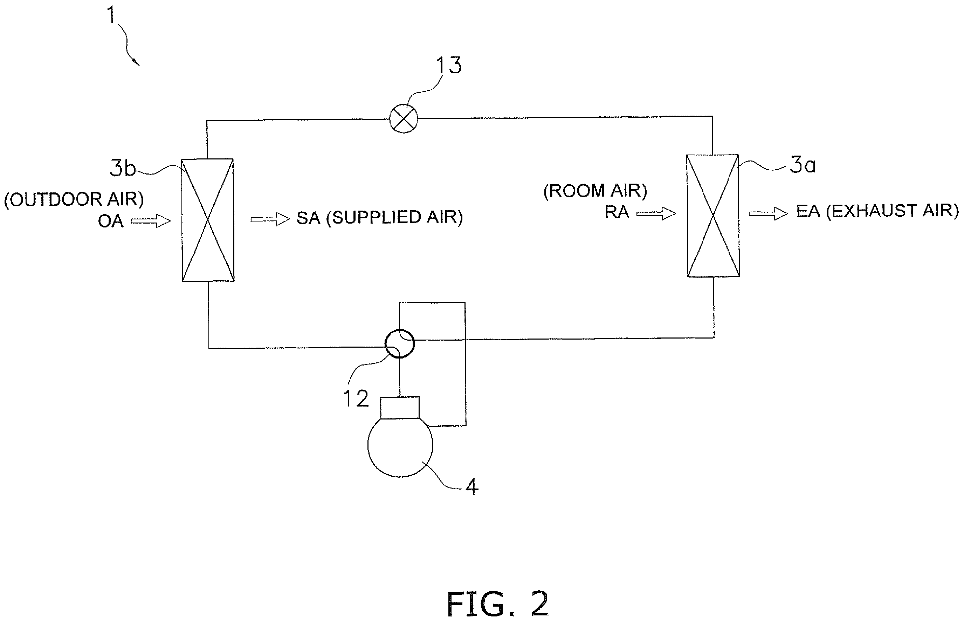

This type of air conditioning apparatus 1 comprises mainly a casing 2, first and second heat exchangers 3a, 3b, a compressor 4, a compressor motor 5, first and second fans 6a, 6b, a first fan motor 7, a second fan motor device 8, a motor current calculation device 9, and a control unit 11, as shown in FIGS. 1 through 4 and FIG 8. The first heat exchanger 3a, the second heat exchanger 3b, and the compressor 4 constitute a refrigerant circuit such as the one shown in FIG. 2.

### (1-1) Casing

The casing 2 has a substantially rectangular parallelepiped shape, inside of which are housed the first and second heat exchangers 3a, 3b, the compressor 4, the first and second fans 6a, 6b, and other components. In FIG. 1, in a left side surface plate 21a of the casing 2 are formed a first suction opening 22 for sucking outdoor air OA into the interior of the casing 2 and a second suction opening 23 for sucking room air RA into the interior of the casing 2. In a right side surface plate 21b of the casing 2 are formed a first blowout opening 24 for blowing out exhaust air EA to the outdoor and a second blowout opening 25 for supplying air SA after humidity conditioning to the room. A duct that extends into the room is connected to the second blowout opening 25, and the supplying air SA after being humidity-conditioned to the room through this duct.

A partitioning plate 26 for partitioning the interior of the casing 2 is provided inside the casing 2. The interior of the casing 2 is divided by this partitioning plate 26 into an air chamber S1 and a machine chamber S2. The first and second heat exchangers 3a, 3b and the partitioning member between the heat exchangers 3a, 3b are disposed in the air chamber S1; and the other devices excluding the first and second heat exchangers 3a, 3b (i.e., the compressor 4, the first and second fans 6a, 6b, etc.) are disposed in the machine chamber S2.

### (1-2) Heat exchangers

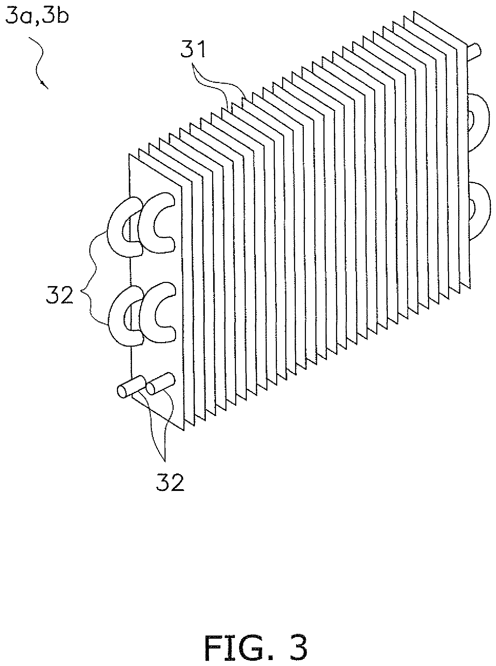

The first heat exchanger 3a and the second heat exchanger 3b are cross-fin type fin-and-tube heat exchangers, comprising numerous aluminum fins 31 formed into a substantially rectangular plate shapes, and copper heat transfer tubes 32 passing through the fins 31, as shown in FIG. 3. An adsorptive agent which adsorbs the moisture contained in the air passing through the heat exchangers 3a, 3b is applied by dip molding (dip forming) or the like over the outside surfaces of the fins 31 and the heat transfer tubes 32. The adsorptive agent herein can be zeolite, silica gel, activate carbon, a hydrophilic or water-absorbing organic macromolecular polymer-based material, an ion-exchange resin-based material having a carboxylic group or sulfonic group, a temperature-sensitive polymer or another functional polymer material, or the like.

These first and second heat exchangers 3a, 3b are connected to each other via an expansion valve 13 as shown in FIG. 2. For example, the first heat exchanger 3a conducts heat exchange with the room air RA taken in through the second suction opening 23, and the second heat exchanger 3b conducts heat exchange with the outdoor air OA taken in through the first suction opening 22. The room air RA after heat exchange is exhausted to the outdoors as exhaust air EA, and the outdoor air OA after heat exchange is supplied into the room as supplying air SA.

The first and second heat exchangers 3a, 3b described above are controlled by the control unit 11 so as to enable a first state in which the first heat exchanger 3a functions as a condenser and the second heat exchanger 3b functions as an evaporator, or a second state in which the first heat exchanger 3a functions as an evaporator and the second heat exchanger 3b functions as a condenser. In the first state, an adsorptive agent reproducing action is performed for removing moisture from the adsorptive agent when the first heat exchanger 3a functions as a condenser, and an adsorption action is performed for causing moisture to absorb to the adsorptive agent when the second heat exchanger 3b functions as an evaporator. In the second state, an adsorption action is performed for causing moisture to absorb to the adsorptive agent when the first heat exchanger 3a functions as an evaporator, and an adsorptive agent reproducing action is performed for removing moisture from the adsorptive agent when the second heat exchanger 3b functions as a condenser. By alternatively performing the adsorption action and the reproducing action in this maenner and switching the flow channels of the air EA, SA supplied in and out of the room through the heat exchangers 3a, 3b, the moisture in the adsorptive agent can be continually adsorbed and emitted (i.e., removed). Consequently, the air conditioning apparatus 1 can perform variety operations while maintaining dehumidification performance or humidification performance.

The flow channels of the air EA, SA supplied in and out of the room through the heat exchangers 3a, 3b are switched by a switching damper (not shown). The switching damper switches the flow channels of the air so that the outdoor air OA or room air RA are blown out from the first blowout opening 24 or the second blowout opening 25 after passing through either of the first heat exchanger 3a or the second heat exchanger 3b.

### (1-3) Compressor and compressor-use motor

The compressor 4 is connected to the first heat exchanger 3a and the second heat exchanger 3b via a four-way switching valve 12, as shown in FIG. 2. The compressor 4 compresses refrigerant from the first heat exchanger 3a or second heat exchanger 3b functioning as an evaporator. The compressor 4 performing a compressing action is driven by the compressor-use motor 5.

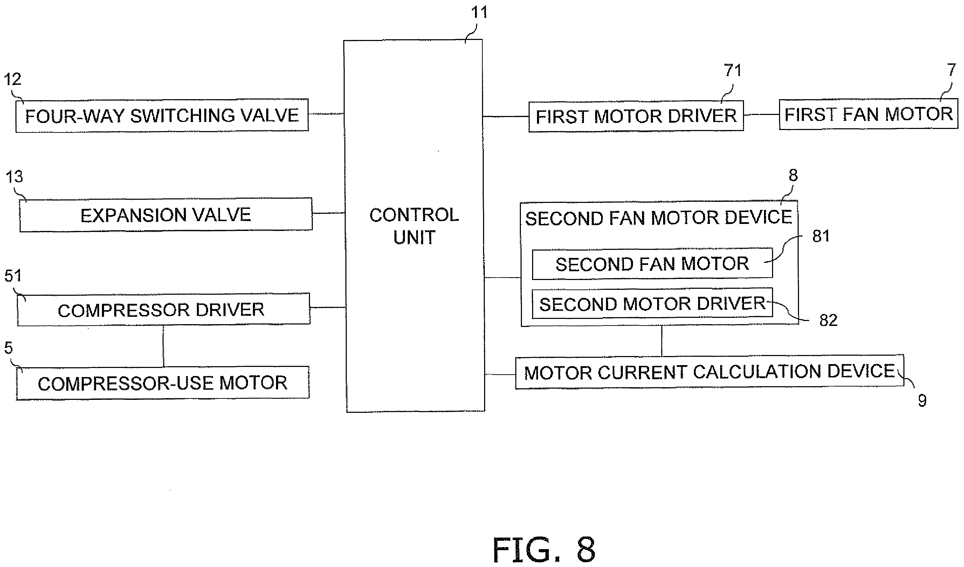

The compressor-use motor 5 is connected to the compressor 4. The compressor-use motor 5 is, a brushless DC motor, for example, and is driven to rotate by a driver 51 (FIG. 8) for the compressor-use motor 5.

### (1-4) Fan and fan motor

The first fan 6a is disposed in a position corresponding to the first blowout opening 24, and the exhaust air EA is blown outside of the casing 2 (specifically, the outdoors) via the first blowout opening 24, as shown in FIG. 1. The second fan 6b is disposed in a position corresponding to the second blowout opening 25, and the supplying air SA is blown outside of the casing 2 (specifically, into the room) via the second blowout opening 25. The first fan 6a is driven to rotate by the first fan motor 7 (FIG. 8), and the second fan 6b is driven rotate by the second fan motor device 8.

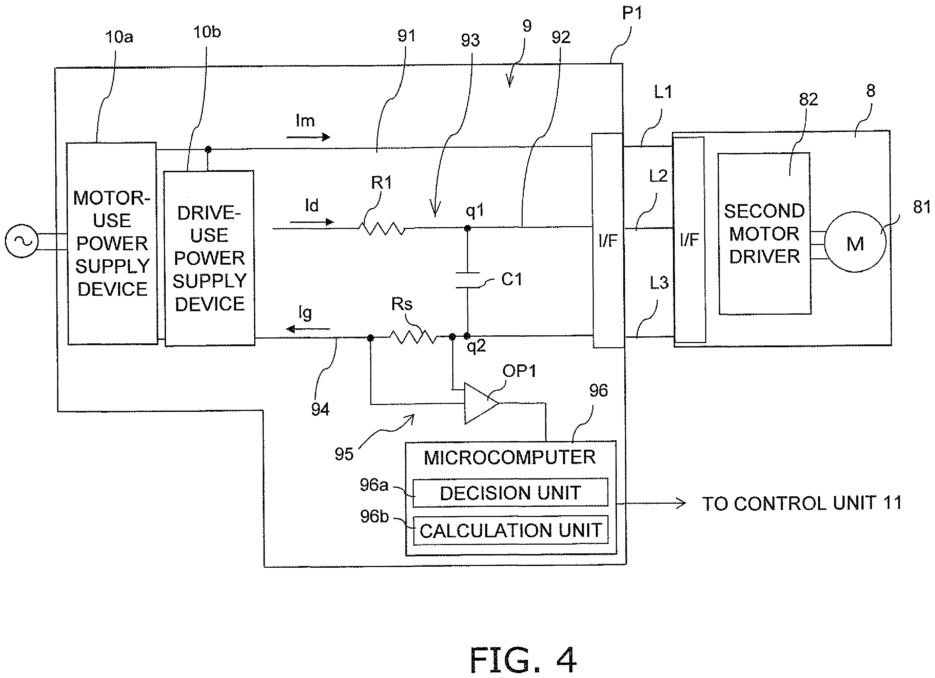

The first fan motor 7 is connected to the first fan 6a. Like the compressor-use motor 5, the first fan motor 7 is a brushless DC motor for example; and is controlled to rotate by a first motor driver 71 for the first fan motor 7. The second fan motor device 8 is connected to the second fan 6b, and is a device including a second fan motor 81 and a second motor driver 82 (equivalent to a motor drive unit), as shown in FIGS. 4 and 8. The second fan motor 81 is a brushless DC motor for example; specifically having a rotor composed of a permanent magnet having a plurality of magnetic poles, and a stator having a drive coil. The second motor driver 82 is for driving the second fan motor 81 to rotate and includes a switching element for passing a current through the drive coil of the second fan motor 81. The second motor driver 82 configured in this manner outputs to the second fan motor 81 a drive voltage corresponding to the position of the rotor relative to the stator.

### (1-5) Motor current calculation device

The motor current calculation device 9 is used to calculate a motor current Im passed through the second fan motor 81, and is mounted on a printed board P1 together with a motor-use power supply device 10a for generating a power supply to be supplied to the second fan motor 81 (hereinafter called "motor power supply") and a drive-use power supply device 10b for generating a power supply to be supplied to the second motor driver 82 (hereinafter called "drive power supply"). The motor-use power supply device 10a and the drive-use power supply device 10b may be a dropper-type power supply, a switching power supply, or of another type. The printed board P1 and the second fan motor device 8 are connected by three harnesses L1, L2, L3 between an interface of the printed board P1 and an interface of the second fan motor device 8. The harnesses L1, L2 are power supply harnesses outputted from the power supply devices 10a, 10b, and the other harness L3 is a GND harness of the second fan motor device 8.

The configuration of the motor current calculation device 9 according to the present embodiment is described below mainly with reference to FIG. 4. The motor current calculation device 9 comprises a motor-use power supply wire 91, a drive-use power supply wire 92 (corresponding to a second wire), a current leveling unit 93, a GND wire 94 (corresponding to a first wire), a current detecting unit 95, and a microcomputer 96.

### (Motor-use power supply wire)

The motor-use power supply wire 91 is a wire joining the output of the motor-use power supply device 10a and the interface of the printed board P1, and a motor-use power supply outputted by the motor-use power supply device 10a is impressed thereon. The motor power-use supply is impressed on the second fan motor 81 of the second fan motor device 8 via the harness L1. Therefore, the motor current Im passed through the second fan motor 81 flows through the motor-use power supply wire 91.

### (Drive-use power supply wire)

The drive-use power supply wire 92 is a wire joining the output of the drive-use power supply device 10b and the interface of the printed board P1, and a drive-use power supply outputted by the drive-use power supply device 10b is impressed thereon. This drive-use power supply is impressed on the second motor driver 82 of the second fan motor device 8 via the harness L2. Therefore, a drive current Id passed through the second motor driver 82 flows along the drive-use power supply wire 92.

### (Current leveling unit)

The current leveling unit 93 levels the drive current Id before it passes through the GND wire 94; i.e., the drive current Id flowing on the drive power-use supply wire 92. The current leveling unit 93 is configured from a filter circuit composed of a resistor R1 and a capacitor C1. The resistor R1 is connected in series on the drive-use power supply wire 92, and the capacitor C1 is connected to the drive-use power supply wire 92 in parallel with respect to the resistor R1. More specifically, one end q1 of the capacitor C1 is connected to the drive-use power supply wire 92 on the drive current Id downstream side of the resistor R1, and another end q2 is connected to the GND wire 94.

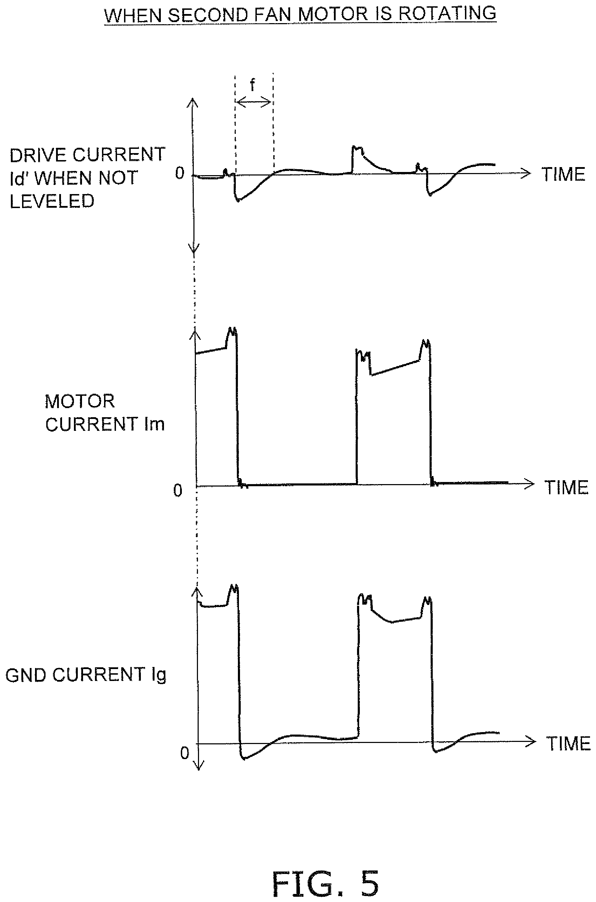

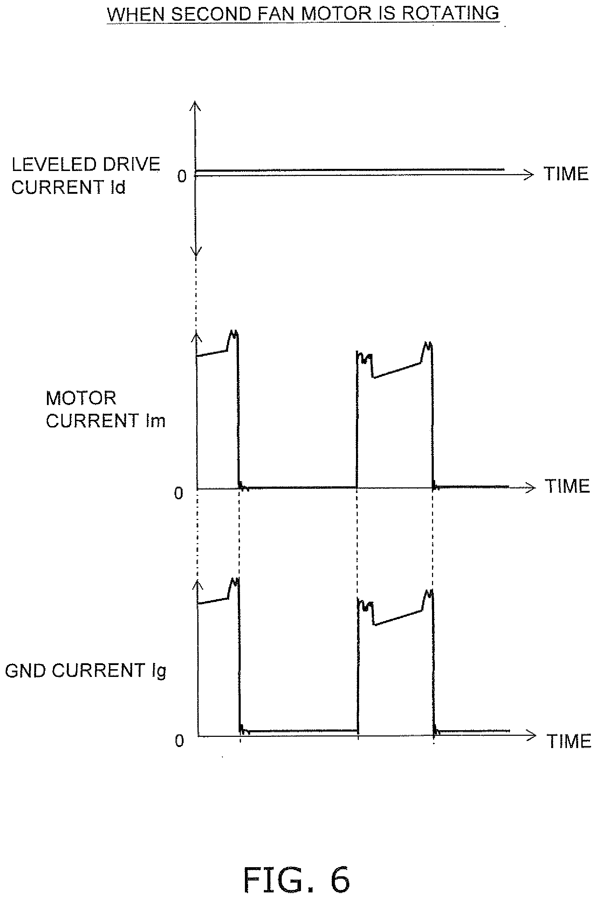

The resistance of the resistor R1 and the capacitance of the capacitor C1 are herein determined as follows, for example. First, in a drive current Id' when current leveling unit 93 is not disposed, the drive current Id' particularly changes, so a frequency f of the portion that should be leveled is measured (FIG. 5). Then, the resistance value of the resistor R1 and the capacitance value of the capacitor C1 are determined such that this frequency f becomes substantially equal to a time constant of the resistor R1 and the capacitor C1. The drive current Id' is leveled in this manner shown in FIG. 6 by a filter circuit configured from the resistor R1 and capacitor C1 thus determined.

### (GND wire)

The GND wire 94 is a wire joining the GND of the power supply devices 10a, 10b and the interface of the printed board P1, and is connected to the GND of the second fan motor device 8 via the harness L3. Therefore, both the motor current Im passed through the second fan motor 81 and the drive current Id leveled by the current leveling unit 93 and passed through the second motor driver 82 flow through the GND wire 94. For the sake of convenience, the current flowing through the GND wire 94 (i.e., the motor current Im and the leveled drive current Id) will be called a GND current Ig below.

### (Current detecting unit)

The current detecting unit 95 detects the GND current Ig flowing through the GND wire 94; i.e., the sum of the motor current Im and the leveled drive current Id. The current detecting unit 95 is mainly configured by a shunt resistor Rs, an operational amplifier OP1, or the like. The shunt resistor Rs is connected in series to the GND wire 94. More specifically, the shunt resistor Rs is connected to the GND wire 94 on the GND current Ig downstream side of the other end q2 of the capacitor C1 in the current leveling unit 93. The two input terminals of the operational amplifier OP1 are respectively connected to the two ends of the shunt resistor Rs, and the output terminal is connected to the microcomputer 96. In the operational amplifier OP1 of such description, when the voltage inputted via the input terminals is amplified by a predetermined gain, the amplified voltage is outputted to the microcomputer 96.

### (Microcomputer)

The microcomputer 96 comprises CPU, and RAM, ROM or another type of memory.. When the microcomputer 96 reads the detection result of the current detecting unit 95, samples this at a predetermined time and A/D converts this. This A/D converted detection result are used to calculation of the motor current Im and determine the drive current Id by the microcomputer 96. The microcomputer 96 functions as a decision unit 96a and a calculation unit 96b in order to perform such actions.

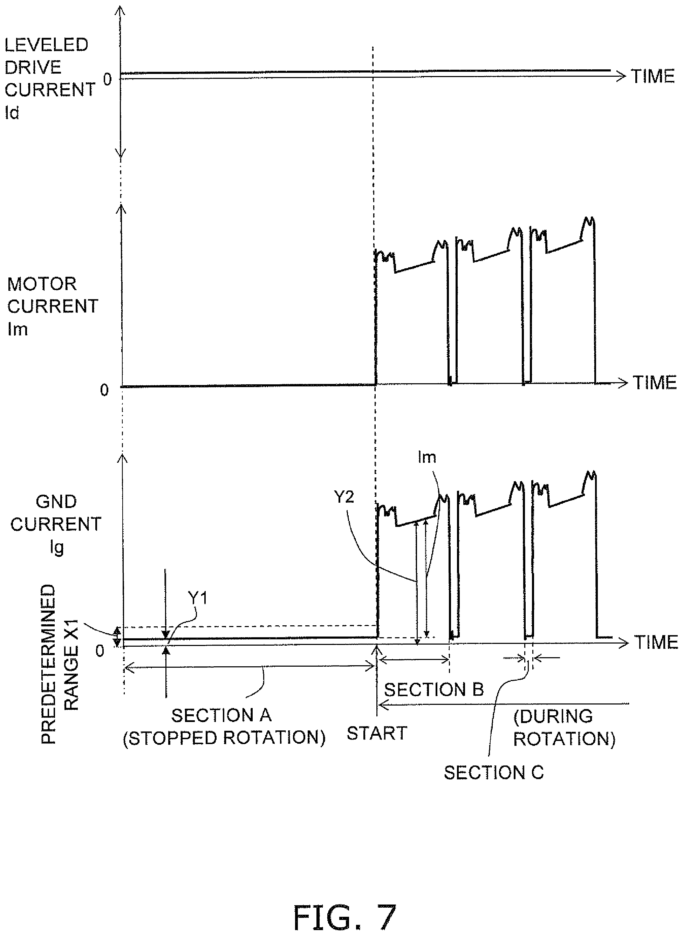

The decision unit 96a determines the detection results of the current detecting unit 95 when the second fan motor 81 is not rotating as the drive current Id. The state in which the second fan motor 81 is not rotating is one in which the second fan motor 81 has not started and rotating speed of the second fan motor 81 is substantially 0 rpm (i.e., a stopped state). Thus, when the second fan motor 81 is stopped, the motor current Im passed through the second fan motor 81 is substantially 0 A, as shown in section A of FIG. 7; however, the drive current Id is passed to the second motor driver 82. Consequently, when the second fan motor 81 is stopped, only the leveled drive current Id flows through the GND wire 94. Therefore, the decision unit 96a determines that the GND current Ig detected by the current detecting unit 95 when the second fan motor 81 is stopped is drive current Id, and determines the GND current Ig to be a so-called offset value used to calculate the motor current Im (Y1 in FIG. 7). The value of the GND current Ig determined as the drive current Id is stored in a memory provided to the microcomputer 96.

It is permissible for the action described above to be performed only when the second fan motor 81 has started. It is also permissible for the action described above to be performed each time the second fan motor 81 stops rotating.

In order for the action described above to be performed, it is first necessary for the decision unit 96a to determine whether or not the second fan motor 81 is in a stopped state. In the present embodiment, an example is given of a case in which the decision unit 96a determines whether or not the second fan motor 81 is in a stopped state based on the detection results of the current detecting unit 95 (i.e., GND current Ig). Specifically, the decision unit 96a determines that the second fan motor 81 has stopped when the value of GND current Ig is close to 0 A and lies within a predetermined range X1, as shown in section A in FIG. 7. When the second fan motor 81 is rotating, the value of the GND current Ig will increase in proportion to the size of motor current Im; therefore, the decision unit 96a will determine that the second fan motor 81 is rotating when the value of GND current Ig falls outside of the predetermined range XI, as shown in section B in FIG. 7.

Since the motor current Im is passed through the second fan motor 81 on a periodic basis, then the value of the GND current Ig may fall back within the predetermined range X1 even after the decision unit 96a has determined that the second fan motor 81 is rotating (section C in FIG. 7). In order to prevent the decision unit 96a from erroneously determining the second motor 81 to be in a stopped state in such instances, it is possible to have the decision unit 96a determine the second fan motor 81 to be rotating when the state in which the value of the GND current Ig lies within the predetermined range X1 continues for a predetermined period of time or longer. This will enable the decision unit 96a to determine with greater accuracy whether or not the second fan motor 81 is in a stopped state. The predetermined range X1 and the predetermined time may be set in advance in accordance with the specification of the second fan motor device 8, experimentation, or another method.

The calculation unit 96b subtracts the drive current Id determined by the decision unit 96a (i.e., value Y1 in FIG. 7) from the detection results Y2 of the current detecting unit 95 when the second fan motor 81 is rotating, and calculates the motor current Im (i.e., Im = Y2 - Y1). Since, as discussed earlier, the motor current Im may fall within the predetermined range X1 when the second fan motor 81 is rotating, the calculation unit 96b may perform calculations on the value Y2 of GND current Ig that falls outside of the predetermined range X1.

### (1-6) Control unit

The control unit 11 is a microcomputer comprising CPU, and RAM, ROM, or another type of memory; and a case in which the control unit 11 is provided separately from the microcomputer 96 of the motor current calculation device 9 is used as an example in the present embodiment. The control unit 11 is connected to the four-way switching valve 12, the expansion valve 13, the compressor driver 51, and the first motor driver 71, as shown in FIG. 8; and performs a control for the devices to which it is connected. For example, the control unit 11 performs a pathway switching control for the four-way switching valve 12, a drive control for the compressor driver 51 and the first motor driver 71, and other types of control.

Particularly, the control unit 11 according to the present embodiment is also connected to the second fan motor device 8 and the motor current calculation device 9, and performs a control for these devices. Specifically, the control unit 11 controls the volume of air sent into the room from the second fan 6b by controlling the rotational speed of the second fan motor 81 on the basis of the motor current Im calculated by the motor current calculation device 9. For example, the control unit 11 generates a control signal for turning the switching elements in the second motor driver 82 on and off on the basis of the motor current Im so that the air volume into the room is substantially constant, and the control unit 11 outputs the generated control signal to the second fan motor device 8. A drive voltage based on the control signal from the control unit 11 is thereby outputted to the second fan motor 81 from the second motor driver 82 of the second fan motor device 8, and the second fan motor 81 rotates.

As described above, the control unit 11 uses the motor current Im to control the rotational speed of the second fan motor 81 and control the volume of air sent into the room, whereby it is possible to maintain substantial consistency in the air volume, which is normally susceptible to the length of wire extending into the room from the second blowout opening 25, the air pressure that varies depending on the width of the room interior, and other factors.

### (2) Effects

(A) When the second fan motor 81 is not rotating (i.e., when rotate speed of the second fan motor 81 is 0 rpm), the motor current Im is substantially 0 A; however, the drive current Id flows to the second motor driver 82, and accordingly can be detected. Therefore, in the motor current calculation device 9 according to the present embodiment, the detection results of the current detecting unit 95 when the second fan motor 81 is not rotating are subtracted from the detection results of the current detecting unit 95 when the second fan motor 81 is rotating, and the motor current Im is calculated. The motor current Im can thereby be determined in a simple manner, even when both the motor current Im and the drive current Id flow through the GND wire 94. Moreover, since the detection results of the current detecting unit 95 when the second fan motor 81 is not rotating are used in the calculations, the capacity of the microcomputer 96 functioning as the calculation unit 96b can be reduced.
(B) The motor current calculation device 9 of the present embodiment further comprises a current leveling unit 93 for leveling the drive current Id before it flows through the GND wire 94. Since the motor current Im and the leveled drive current Id both flow through the GND wire 94, the current detecting unit 95 can thereby detect the sum of the motor current Im and the leveled drive current Id. Consequently, the microcomputer 96 functioning as the calculation unit 96b can determine the motor current Im using stable detection results that include the drive current Id.
(C) In particular, the current leveling unit 93 in the motor current calculation device 9 can be configured from a so-called filter circuit composed of a resistor R1 and a capacitor C1. The motor current calculation device 9 is thus capable of leveling the drive current Id using a current leveling unit 93 having a simple configuration.
(D) When the second fan motor 81 and the second motor driver 82 are built into the second fan motor device 8, it is difficult to separately disposed the the wire on which the motor current Im that has been passed through the second fan motor 81 and the wire on which the drive current Id that has been passed through the second motor driver 82 flow. However, when the motor current calculation device 9 according to the present embodiment is applied in such a case, the detection results outputted by the current detecting unit 95 when the second fan motor 81 is not operating are used in computations as the drive current Id; therefore, the motor current calculation device 9 can calculate the motor current Im with a high degree of accuracy.
(E) Furthermore, the motor current calculation device 9 can be used for calculating the current of the second fan motor 81 in an air conditioning apparatus 1. Thus, according to the air conditioning apparatus 1 having the motor current calculation device 9, the control unit 11 can perform a control on the basis of an accurate motor current Im calculated by the motor current calculation device 9 so that that, e.g., the volume of air sent into a room remains constant.

### (Other Embodiments)

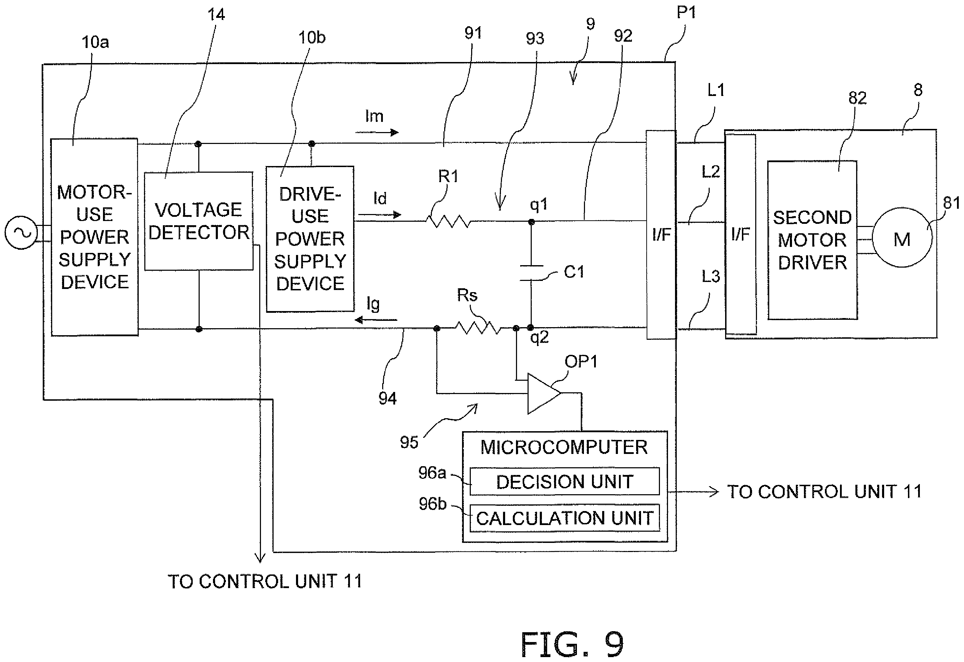

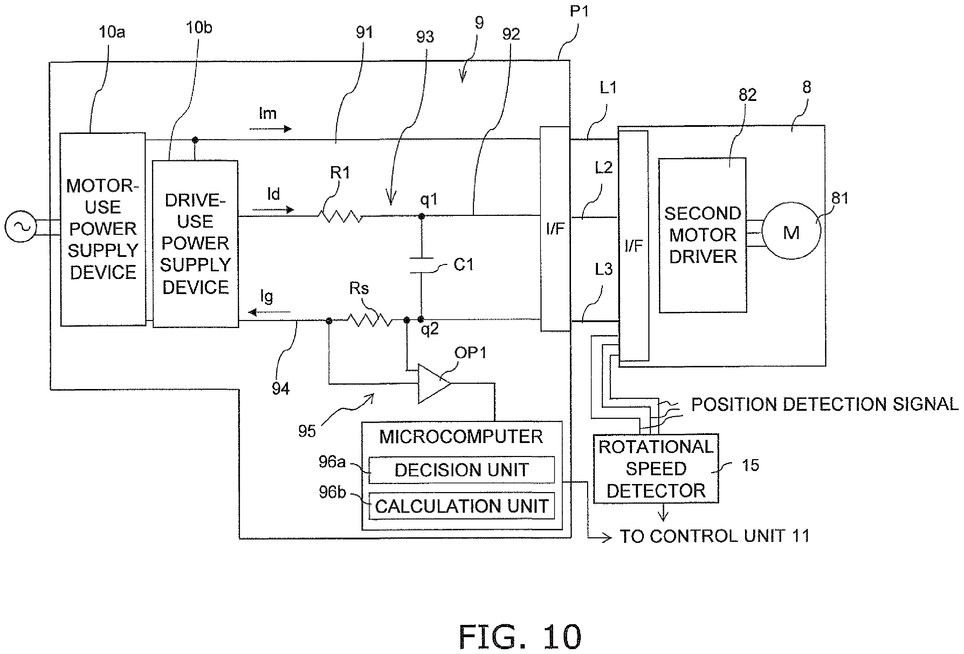

(a) According to the above embodiment, there is described an example of a case in which the air conditioning apparatus 1 is a desiccant-type outdoor air conditioner comprising internal heat exchangers. However, the air conditioning apparatus according to the present invention can also be applied to a desiccant air conditioner in which the heat exchangers are disposed separately from the air conditioning apparatus, or an air conditioner using a system other than a desiccant system.
(b) According to the above embodiment, there is described a case in which the motor current calculation device 9 comprises a current leveling unit 93 for leveling the drive current Id on the drive-use power supply wire 92. However, even if the drive current Id is not leveled, the motor current calculation device according to the present invention need not include a current leveling unit as long as the motor current Im can be calculated by subtracting the results of the current detecting unit 95 when the second fan motor 81 is not rotating from the results of the current detecting unit 95 when the second fan motor 81 is rotating.
   According to the above embodiment, there is described a case in which the current leveling unit 93 is configured from a filter composed of a resistor R1 and a capacitor C1. However, the current leveling unit may be of any configuration as long as the drive current Id can be leveled before flowing through the GND wire 94.
(c) According to the above embodiment, there is described a case in which the decision unit 96a determines whether or not the second fan motor 81 is in a stopped state, based on the value of the GND current Ig. However, there are no particular limitations as to the method by which the decision unit 96a determines the state of the second fan motor 81. For example, in a case where the second fan motor 81 comprises a position-detecting unit for detecting the position of the rotor relative to the stator, and the second fan motor device 8 is capable of outputting the detection results of the position-detecting unit to the exterior of the second fan motor device 8, then a wire via which the detection results are inputted to the microcomputer 96 may be provided. As a result, the decision unit 96a will be capable of determining whether or not the second fan motor 81 is rotating, based on the detection results of the position-detection unit.
   Examples of position-detection units include types in which the position of the rotor is directly detected using a Hall element, a Hall IC, or another magnetic detection sensor; and types in which an induced voltage generated on a drive coil is used to detect the rotor position indirectly.
(d) According to the above embodiment, there is described a case in which the microcomputers used for the decision unit 96a and the calculation unit 96b of the motor current calculation device 9 are different from the microcomputer constituting the control unit 11. However, the decision unit 96a, the calculation unit 96b, and the control unit 11 may be a single microcomputer. In such instances, a program for setting the drive current, a program for calculating the motor current, and programs for controlling a variety of devices are stored in the memory of the microcomputer. Retrieving and executing any of the memory-resident programs for setting the drive current, for calculating the motor current, or for controlling a variety of devices will enable the microcomputer to function as the decision unit 96a, the calculation unit 96b, or the control unit 11.
(e) According to the above embodiment, there is described a case in which the second fan motor device 8 includes the second fan motor 81 and the second motor driver 82, and the motor current calculation device 9 detects the motor current Im of the second fan motor 81 in the second fan motor device 8. However, the application of the motor current calculation device according to the present invention is not limited to this example. The motor current calculation device according to the present invention can also be applied to a case in which, for example, the motor and the driver are provided separately, but instead of having a motor current GND wire through which the motor current Im flows and a drive current GND wire through which the drive current Id flows provided separately, the motor current Im and the drive current Id flow through a single GND wire.
(f) According to the above embodiment, there is described a case in which the motor current calculation device 9 detects a GND current Ig including the motor current Im passed through the second fan motor 81 and calculates the motor current Im from the GND current Ig in order to control the volume of supplying air SA supplied into a room. However, the objective of the current detection performed by the motor current detecting device according to the present invention need not be the second fan motor 81. The motor current calculation device may also be used to detect currents for the first fan motor 7 or the compressor-use motor 5, for example.
   The first fan motor 7 maybe included with the first motor driver 71 in a fan motor device, similar to the second fan motor 81.
(g) According to the above embodiment, a voltage detector 14 may be connected between the output of the motor-use power supply device 10a and the GND, as shown in FIG. 9. The voltage detector 14 detects the voltage of the power supply outputted by the motor-use power supply device 10a. The voltage detected by the voltage detector 14 is sent to the control unit 11. The control unit 11 can thereby use the detected voltage and the calculated motor current Im to calculate the motor power of the second fan motor 81. Consequently, the control unit 11 can perform a variety of controls or the like on the second fan motor 81 or the other devices included in the air conditioning apparatus 1, using the motor power.
(h) According to the above embodiment, a rotational speed detector 15 for detecting the rotational speed of the second fan motor 81 may also be provided, as shown in FIG. 10. The rotational speed detector 15 may be of any type, such as a detector that is attached directly to the second fan motor device 8 and detects the rotational speed of the second fan motor 81, a detector for detecting the rotational speed using a position-detection signal emitted by a Hall element for detecting the position of the rotor relative to the stator, or a detector for estimating the position of the rotor on the basis of the drive voltage outputted to the second fan motor 81 by the second motor driver 82 and using the estimated rotor position to detect the rotational speed. If the rotational speed detector 15 is not one that is attached directly to the second fan motor device 8, then it may be mounted either on the printed board PI or on another circuit board different from the printed board P1. FIG. 10 shows a case in which the rotational speed detector 15 is mounted on another printed board separate from the printed board P1. The rotational speed of the second fan motor 81 as detected by the rotational speed detector 15 is also sent to the control unit 11.

The control unit 11 can thereby calculate the motor torque of the second fan motor 81 using the detected rotational speed of the second fan motor 81 and the calculated motor current Im. Consequently, the control unit 11 can use this motor torque to perform a variety of controls or the like on the second fan motor 81 and other devices included in the air conditioning apparatus 1.

### INDUSTRIAL APPLICABILITY

An effect of the motor current calculation device according to the present invention is to make it possible for a motor current to be determined in a simple manner, and a microcomputer functioning as a calculation unit to be reduced in capacity. The device can be used in an air conditioning apparatus.

## Claims

1. A motor current calculation device (9) comprising:
a first wire (94) through which flow a motor current that has been passed through a motor (81) and a drive current that has been passed through a motor drive unit (82) for driving the motor (81), a current detecting unit (95) configured to detect the sum of the motor current and the drive current flowing through the first wire (94); a decision unit (96a) configured to determine a detection result of the current detecting unit (95) when the motor (81) is not rotating as the drive current; and a calculation unit (96b) configured to calculate the motor current by subtracting the drive current determined by the decision unit (96a) from a detection result of the current detecting unit (95) when the motor (81) is rotating,
**characterized in that**
the motor current calculation device (9) is mounted on a printed board (P1) together with a motor-use power supply device (10a) for generating a power supply for the motor (81) and a drive-use power supply device (10b) for generating a power supply for the motor drive unit (82);
a second wire (91) joins the output of the motor-use power supply device (10a) and an interface (I/F) of the printed board (P1); and
a third wire (92) joins the output of the drive-use power supply device (10b) and the interface (I/F) of the printed board (P1).

2. The motor current calculation device (9) according to claim 1, further comprising:
a current leveling unit (93) that levels the drive current before the drive current has flowed through the first wire (94).

3. The motor current calculation device (9) according to claim 2, wherein: the current leveling unit (93) has a resistor (R1) connected in series on the third wire (92), and a capacitor (C2) connected to the third wire (92) in parallel with respect to the resistor (RI).

4. The motor current calculation device (9) according to any of claims 1 through 3, wherein: the motor (81) and the motor drive unit (82) are included in a motor device (8).

5. An air conditioning apparatus (1) **characterized by** comprising:
the motor current calculation device (9) according to any of claims 1 through 4;
a fan motor (81) that is included in a motor device (8) together with the motor drive unit (82) and through which the motor current is passed; a fan (6b) that is driven to rotate by the fan motor (81); and
a control unit (11) that performs control of the volume of air sent into a room the 30 from the fan (6b) on the basis of the motor current that has been calculated by the
calculation unit (96b) of the motor current calculation device (9).

## Patentansprüche

1. Motorstrom-Berechnungsvorrichtung (9), umfassend:
einen ersten Draht (94), durch den ein Motorstrom, der durch einen Motor (81) geleitet wurde, und ein Antriebsstrom, der durch eine Motorantriebseinheit (82) zum Antreiben des Motors (81) geleitet wurde, fließen,
eine Stromerfassungseinheit (95), die konfiguriert ist, um die Summe aus dem durch den ersten Draht (94) fließenden Motorstrom und Antriebsstrom zu erfassen; eine Entscheidungseinheit (96a), die konfiguriert ist, um ein Erfassungsergebnis der Stromerfassungseinheit (95) zu bestimmen, wenn sich der Motor (81) nicht als der Antriebsstrom dreht; und eine Berechnungseinheit (96b), die konfiguriert ist, um den Motorstrom durch Subtrahieren des Antriebsstroms, der von der Entscheidungseinheit (96a) bestimmt wurde, von einem Erfassungsergebnis der Stromerfassungseinheit (95) zu berechnen, wenn sich der Motor (81) dreht,
**dadurch gekennzeichnet, dass**
die Motorstrom-Berechnungsvorrichtung (9) auf einer Leiterplatte (P1) zusammen mit einer vom Motor genutzten Energieversorgungsvorrichtung (10a) zum Erzeugen einer Energieversorgung für den Motor (81) und einer vom Antrieb genutzten Energieversorgungsvorrichtung (10b) zum Erzeugen einer Energieversorgung für die Motorantriebseinheit (82) montiert ist;
ein zweiter Draht (91) den Ausgang der vom Motor genutzten Energieversorgungsvorrichtung (10a) und eine Schnittstelle (I/F) der Leiterplatte (P1) miteinander verbindet; und
ein dritter Draht (92) den Ausgang der vom Antrieb genutzten Energieversorgungsvorrichtung (10b) und die Schnittstelle (I/F) der Leiterplatte (P1) miteinander verbindet.

2. Motorstrom-Berechnungsvorrichtung (9) nach Anspruch 1, weiter umfassend:
eine Stromausgleichseinheit (93), die den Antriebsstrom ausgleicht, bevor der Antriebsstrom durch den ersten Draht (94) geflossen ist.

3. Motorstrom-Berechnungsvorrichtung (9) nach Anspruch 2, wobei: die Stromausgleichseinheit (93) einen Widerstand (R1) aufweist, der auf dem dritten Draht (92) in Reihe geschaltet ist, und einen Kondensator (C2), der in Bezug auf den Widerstand (RI) parallel mit dem dritten Draht (92) geschaltet ist.

4. Motorstrom-Berechnungsvorrichtung (9) nach einem der Ansprüche 1 bis 3, wobei: der Motor (81) und die Motorantriebseinheit (82) in einer Motorvorrichtung (8) eingeschlossen sind.

5. Klimaanlageneinrichtung (1), **dadurch gekennzeichnet, dass** sie umfasst:
die Motorstrom-Berechnungsvorrichtung (9) nach einem der Ansprüche 1 bis 4;
einen Gebläsemotor (81), der in einer Motorvorrichtung (8) zusammen mit der Motorantriebseinheit (82) eingeschlossen ist und durch den der Motorstrom geleitet wird; ein Gebläse (6b), das durch den Gebläsemotor (81) drehend angetrieben wird; und eine Steuereinheit (11), die eine Steuerung der Luftmenge durchführt, die von dem Gebläse (6b) in einen Raum geschickt wird, basierend auf dem Motorstrom, der von der Berechnungseinheit (96b) der Motorstrom-Berechnungsvorrichtung (9) berechnet wurde.

## Revendications

1. Dispositif de calcul de courant de moteur (9) comprenant :
un premier fil (94) au travers duquel circulent un courant de moteur qui a été passé au travers d'un moteur (81) et un courant d'entraînement qui a été passé au travers d'une unité d'entraînement de moteur (82) pour l'entraînement du moteur (81), une unité de détection de courant (95) configurée pour détecter la somme du courant de moteur et du courant d'entraînement circulant au travers du premier fil (94) ; une unité de décision (96a) configurée pour déterminer un résultat de détection de l'unité de détection de courant (95) lorsque le moteur (81) ne tourne pas comme courant d'entraînement; et une unité de calcul (96b) configurée pour calculer le courant de moteur par soustraction du courant d'entraînement déterminé par l'unité de décision (96a) à partir d'un résultat de détection de l'unité de détection de courant (95) lorsque le moteur (81) tourne,
**caractérisé en ce que**
le dispositif de calcul de courant de moteur (9) est monté sur une carte de circuit imprimé (P1) conjointement avec un dispositif d'alimentation électrique (10a) pour une utilisation de moteur pour la génération d'une alimentation électrique pour le moteur (81) et un dispositif d'alimentation électrique (10b) pour une utilisation d'entraînement pour la génération d'une alimentation électrique pour l'unité d'entraînement de moteur (82) ;
un deuxième fil (91) joint la sortie du dispositif d'alimentation électrique (10a) pour une utilisation de moteur et une interface (I/F) de la carte de circuit imprimé (P1) ; et
un troisième fil (92) joint la sortie du dispositif d'alimentation électrique (10b) pour une utilisation d'entraînement et l'interface (I/F) de la carte de circuit imprimé (P1).

2. Dispositif de calcul de courant de moteur (9) selon la revendication 1, comprenant en outre :
une unité d'égalisation de courant (93) qui égalise le courant d'entraînement avant que le courant d'entraînement n'ait circulé au travers du premier fil (94).

3. Dispositif de calcul de courant de moteur (9) selon la revendication 2, dans lequel : l'unité d'égalisation de courant (93) présente une résistance (R1) raccordée en série au troisième fil (92), et un condensateur (C2) raccordé au troisième fil (92) en parallèle de la résistance (RI).

4. Dispositif de calcul de courant de moteur (9) selon l'une quelconque des revendications 1 à 3, dans lequel :
le moteur (81) et l'unité d'entraînement de moteur (82) sont inclus dans un dispositif à moteur (8).

5. Appareil de climatisation (1) **caractérisé en ce qu'**il comprend :
le dispositif de calcul de courant de moteur (9) selon l'une quelconque des revendications 1 à 4 ;
un moteur de ventilateur (81) qui est inclus dans un dispositif à moteur (8) conjointement avec l'unité d'entraînement de moteur (82) et au travers duquel le courant de moteur circule ; un ventilateur (6b) qui est entraîné à tourner par le moteur de ventilateur (81) ; et
une unité de commande (11) qui réalise une commande de volume d'air envoyé dans une salle (30) depuis le ventilateur (6b) sur la base du courant de moteur qui a été calculé par l'unité de calcul (96b) du dispositif de calcul de courant de moteur (9).
